# DEMANDE DE BREVET EUROPEEN

(11) **EP 0 947 378 A1**
(43) Date de publication de la demande: **06.10.1999**
(21) Numéro de dépôt: 99400785.4
(22) Date de dépôt: 31.03.1999
(51) Int. Cl.: B60L 11/18, H01F 27/12

(54) **Dispositif de refroidissement pour système électronique de puissance**

(30) Priorité: 02.04.1998 FR 9804095
(71) Demandeur: Steve Ingenierie, 44000 Nantes (FR)
(72) Inventeur: Le Gal, Claude, 44000 Nantes (FR)
(74) Mandataire: Abello, Michel

(57) **Abrégé**

Le système électronique de puissance est relié, à l'entrée, à un câble d'alimentation en électricité (24), et à sa sortie, à un câble conducteur (17) connecté à un système de transmission de courant, l'ensemble du dispositif étant destiné à être enterré dans le sol dans une cuve en béton (1) de façon que ledit système de transmission de courant soit susceptible de transmettre un courant dans une machine électrique, caractérisé en ce qu'il comporte un récipient métallique étanche (2) en forme de cuvette remplie de liquide caloporteur, un compartiment étanche étant situé sous le fond (2a) de la cuvette, dans lequel est logé le système électronique de puissance dont au moins un composant électronique de puissance est directement fixé sur la face inférieure du fond de la cuvette, en un emplacement déterminé de façon à engendrer dans le récipient un brassage du liquide caloporteur par thermosiphonnage.

## Description

La présente invention concerne un dispositif de refroidissement pour un système électronique de puissance, destiné notamment à permettre la recharge d'une batterie d'accumulateur électrique d'un véhicule automobile, en un emplacement déterminé sur la voie publique.

On connaît déjà des bornes d'alimentation électrique pour permettre la recharge d'une batterie de véhicule automobile, sur la voie publique, en reliant par des conducteurs la batterie à la borne. Toutefois, de telles bornes peuvent être soumises à des actes de vandalisme et on a alors proposé d'enterrer les systèmes permettant la recharge, et d'effectuer cette recharge par induction au lieu d'utiliser des câbles conducteurs. Ce système connu consiste à placer dans une cuve en béton enterrée dans le sol un boîtier électronique de puissance, relié, à l'entrée, à un câble d'alimentation en électricité et, à sa sortie à un câble conducteur connecté à un inducteur, la cuve en béton étant obturée au niveau du sol par une plaque en fonte qui est percée pour permettre l'accès à l'inducteur, ce dernier étant destiné à engendrer, sous l'action du boîtier électronique de puissance, un champ électromagnétique agissant sur un induit porté par le véhicule automobile stationnant au-dessus de l'inducteur, pour recharger la batterie du véhicule.

Le boîtier électronique de puissance comporte généralement des transistors de puissance qui dégagent une chaleur importante, lors de leur fonctionnement, par exemple de l'ordre de 200 Watts. Cette chaleur dégagée doit être dissipée pour éviter que la température dans le boîtier ne dépasse une température de l'ordre de 50-60 °C, au-delà de laquelle les composants électroniques peuvent être endommagés. A cet effet, on utilise comme dispositif de refroidissement, des serpentins remplis d'eau froide recouvrant le boîtier électronique au niveau de l'emplacement des transistors de puissance, la circulation de l'eau froide étant assurée par une pompe. Il n'est pas possible de refroidir le boîtier par l'air extérieur en prévoyant des trous à travers la plaque en fonte, car la cuve en béton doit être étanche. On peut également prévoir, à la place des serpentins d'eau froide, des dispositifs de ventilation d'air à l'intérieur de la cuve.

Toutefois, ces dispositifs de refroidissement sont compliqués et utilisent des organes en mouvement qui peuvent subir des pannes au cours de leur fonctionnement. En outre, ces dispositifs de refroidissement utilisent un système d'entraînement qui consomme de l'énergie et donc grève le coût de l'ensemble.

L'invention a pour but d'éliminer les inconvénients précités et de proposer un dispositif de refroidissement pour un système électronique de puissance, qui soit de structure simple et nécessite peu ou pas d'entretien.

A cet effet, l'invention a pour objet un dispositif de refroidissement pour un système électronique de puissance, ledit système électronique de puissance étant relié, à l'entrée, à un câble d'alimentation en électricité, et à sa sortie, à un câble conducteur connecté à un système de transmission de courant, l'ensemble du dispositif étant destiné à être enterré dans le sol dans une cuve en béton de façon que ledit système de transmission de courant soit susceptible de transmettre un courant dans une machine électrique extérieure au dispositif, caractérisé en ce qu'il comporte un récipient métallique étanche en forme de cuvette remplie de liquide caloporteur, un compartiment étanche étant situé sous le fond de la cuvette, dans lequel est logé le système électronique de puissance dont au moins un composant électronique de puissance est directement fixé sur la face inférieure du fond de la cuvette, en un emplacement déterminé de façon à engendrer dans le récipient un brassage du liquide caloporteur par thermosiphonnage, pour dissiper dans le liquide la chaleur dégagée par le composant électronique de puissance qui s'échauffe en fonctionnement, et ainsi assurer que les composants électroniques de puissance ne dépassent pas la température maximale tolérée par les composants électroniques, quelles que soient les conditions climatiques extérieures.

Dans un premier mode de réalisation, le système de transmission de courant comporte un inducteur connecté au câble conducteur et disposé dans un boîtier, ledit boîtier inducteur baignant dans le liquide caloporteur contenu dans le récipient métallique, ledit inducteur étant apte à engendrer un courant induit dans une machine électrique située au-dessus de l'inducteur, par exemple pour la recharge d'une batterie de véhicule automobile.

Dans un autre mode de réalisation, le système de transmission de courant comporte une prise de courant connectée au câble conducteur qui traverse le récipient sur toute sa hauteur, pour une transmission de courant par contact, ladite prise étant située de préférence au niveau d'une plaque de fermeture supérieure du récipient.

En variante, le câble pourrait traverser le récipient et se connecter à un inducteur extérieur au récipient.

Avantageusement, le récipient comporte une cheminée, de préférence de forme générale tronconique, s'étendant verticalement à partir du fond du récipient et destinée à être traversée par le câble conducteur qui traverse, de manière étanche, le fond de la cuvette et débouche dans le compartiment étanche, afin d'accélérer le brassage thermique dans le liquide. La cheminée est de préférence sensiblement au centre du récipient, et les composants électroniques de puissance sont fixés au fond du récipient en des emplacements répartis autour de la base de la cheminée.

Selon une autre caractéristique, le boîtier d'inducteur comporte à sa base un fond creux en forme de cloche destinée à coiffer latéralement le haut de la cheminée, de façon que ladite cloche baigne dans la zone supérieure chaude du liquide, afin de permettre une évacuation de la chaleur, par l'intermédiaire du boîtier d'inducteur, vers l'air extérieur.

Selon encore une autre caractéristique, le fond du récipient comporte au moins un renfoncement faisant saillie dans le compartiment du système électronique de puissance, le ou les composants électroniques de puissance étant fixés sur la face inférieure du fond du ou des renfoncements.

On peut prévoir que le fond du récipient comporte des plots en saillie vers l'intérieur du récipient pour permettre d'y enfoncer des moyens de fixation pour les composants électroniques, à partir de la face inférieure du fond du récipient.

Avantageusement, le récipient comporte à sa base une jupe périphérique descendante délimitant avec la face inférieure du fond du récipient le compartiment précité. De préférence, le fond du compartiment est obturé par une plaque de fermeture, éventuellement avec interposition d'un joint d'étanchéité entre la plaque et le bord inférieur de la jupe du récipient.

Selon encore une autre caractéristique, la jupe précitée comporte une cloison interne délimitant un logement séparé du compartiment précité pour y loger un bornier entre ledit système électronique de puissance et le câble d'alimentation, ledit logement débouchant d'une part, à travers un trou ménagé dans la cloison interne, dans le compartiment du système électronique de puissance pour la connexion électrique entre ledit système et le bornier, et d'autre part, à travers un trou ménagé dans la paroi externe de la jupe sur l'extérieur pour le passage du câble d'alimentation. Dans ce cas, le fond du logement peut être obturé par une plaque de fermeture indépendante de la plaque de fermeture du compartiment, avec interposition éventuelle d'un joint d'étanchéité individuel.

Dans une forme de réalisation particulière, le récipient comporte sur sa paroi latérale interne des moyens de support destinés à coopérer avec des moyens d'appui fixés au boîtier d'inducteur, pour positionner et supporter le boîtier d'inducteur à l'intérieur du récipient. Par exemple, les moyens de support, peuvent être formés par des nervures verticales en saillie sur des parois latérales internes du récipient et les moyens d'appui par des pattes s'étendant dans un plan perpendiculaire à l'axe vertical du récipient, à partir d'une couronne métallique solidarisée au boîtier d'inducteur, lesdites pattes étant destinées à reposer sur le sommet des nervures. On peut prévoir des moyens de fixation destinés à traverser au moins une patte et la nervure associée, pour immobiliser le boîtier d'inducteur dans le récipient.

Selon une autre caractéristique, le récipient comporte sur son bord supérieur une collerette périphérique s'étendant vers l'extérieur dans un plan perpendiculaire à l'axe du récipient, pour y fixer, avec interposition éventuelle d'un joint d'étanchéité, une plaque de fermeture supérieure, de préférence en fonte, destinée à être positionnée au niveau du sol. Dans ce cas, ladite plaque supérieure peut comporter un trou central destiné à recevoir un couvercle plastique qui est fixé au sommet du boîtier de l'inducteur.

Selon encore une autre caractéristique, ladite collerette est destinée à reposer sur le bord périphérique supérieur de la cuve qui est réalisée en béton armé pour faciliter le transfert thermique entre la terre environnante et le récipient.

Généralement, les composants électroniques de puissance du système sont des transistors de puissance. Avantageusement, le récipient a une forme sensiblement en tronc de pyramide, dont la grande base est ouverte vers le haut.

L'invention sera mieux comprise, et d'autres buts, détails, caractéristiques et avantages de celle-ci apparaîtront plus clairement au cours de la description explicative détaillée qui va suivre d'un mode de réalisation particulier actuellement préféré de l'invention, donné uniquement à titre illustratif et non limitatif, en référence aux dessins schématiques annexés dans lesquels :
- la figure 1 est une vue en perspective éclatée de l'ensemble du dispositif selon l'invention ;
- la figure 2 est une vue en perspective de dessous du récipient de la figure 1,
- la figure 3 est une vue en plan et de dessus du récipient de la figure 2,
- la figure 4 est une vue en coupe brisée à plans parallèles, suivant la ligne IV du récipient de la figure 3, et
- la figure 5 est une vue partielle et en coupe suivant la ligne V du récipient de la figure 3.

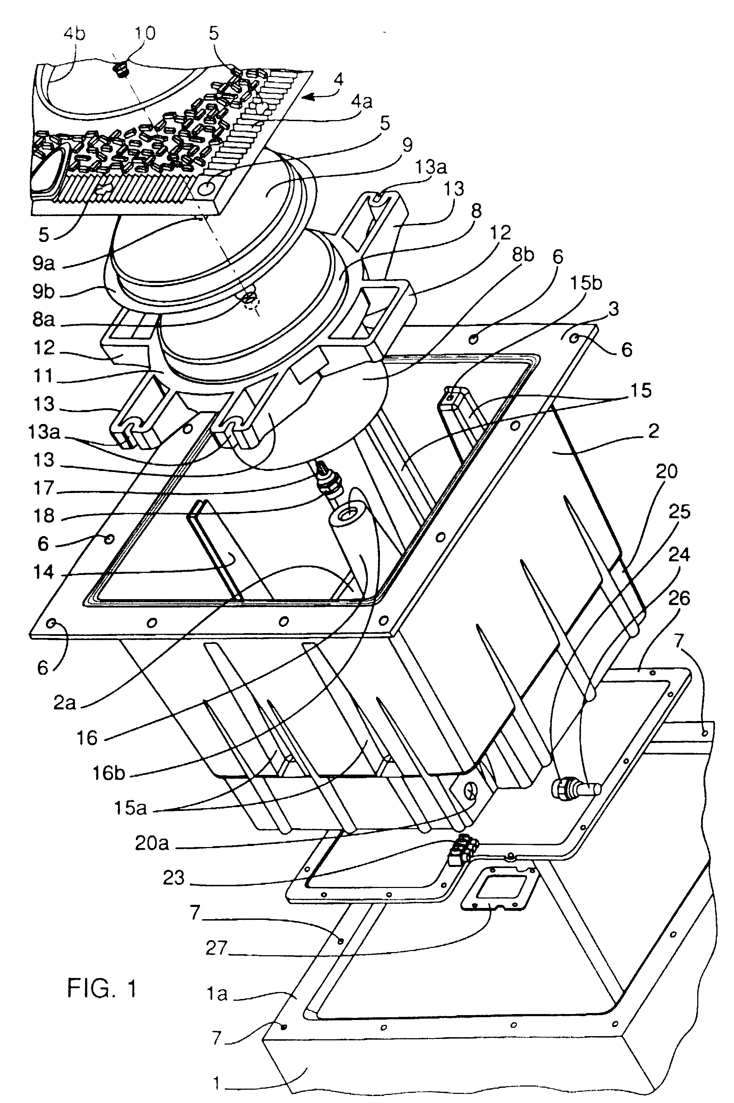

Sur la figure 1, est partiellement représentée une cuve en béton armé 1 en forme générale de cube creux, ouvert vers le haut, dans laquelle est logé un récipient 2 en forme de cuvette ouverte vers le haut et ayant une section transversale sensiblement carrée. Le récipient 2 comporte une collerette périphérique supérieure 3 s'étendant vers l'extérieur dans un plan horizontal sensiblement perpendiculaire à l'axe du récipient, ladite collerette 3 étant destinée à venir en appui contre le bord périphérique supérieur la de la cuve en béton armé 1, avec interposition éventuelle d'un joint d'étanchéité.

Une plaque supérieure de fermeture en fonte 4 est destinée à recouvrir l'ouverture du récipient 2 et à venir en appui par son bord périphérique 4a sur la face supérieure de la collerette 3 du récipient 2. La plaque supérieure en fonte 4, la collerette 3 et le bord supérieur périphérique la de la cuve en béton armé 1 comportent respectivement des trous 5,6 et 7 pour leur assemblage par des moyens de fixation non représentés, par exemple par des vis.

La plaque en fonte 4 est destinée à être placée au niveau du sol, par exemple au niveau d'un trottoir ou de la voie publique, pour les raisons qui sont indiquées plus loin. La plaque en fonte 4 comporte en son centre un trou circulaire traversant 4b pour recevoir le haut d'un inducteur moulé dans un boîtier de forme cylindrique circulaire 8. Le boîtier de l'inducteur 8 est destiné à être chapeauté par un couvercle en plastique 9 recouvrant sa partie supérieure et qui est reçu dans le trou 4b de la plaque en fonte 4. Le couvercle 9 comporte en son centre un perçage 9a qui est destiné à s'aligner avec un taraudage 8a prévu au centre de la surface supérieure du boîtier d'inducteur 8, pour permettre de fixer le couvercle 9 sur le boîtier d'inducteur 8, par l'intermédiaire d'une vis 10 traversant le perçage 9a du couvercle 9 et venant se visser dans le taraudage 8a du boîtier d'inducteur 8. Le couvercle 9 étant en plastique, le transfert d'énergie électromagnétique peut se faire par induction entre la surface supérieure de l'inducteur 8, à travers le couvercle 9 et le trou 4b de la plaque en fonte 4, vers un induit positionné au-dessus et non représenté sur les dessins.

Une couronne métallique 11, de préférence en aluminium est emmanchée et fixée sur la paroi latérale externe du boîtier d'inducteur 8, le couvercle 9 présentant à sa base une collerette 9b saillante vers l'extérieur qui est destinée à prendre appui sur la couronne métallique 11. La couronne métallique 11 comporte une pluralité de pattes latéralement saillantes à partir de sa périphérie, s'étendant dans un plan sensiblement perpendiculaire à l'axe de la couronne. Par exemple, la couronne 11 comporte une première paire de pattes 12 diamétralement opposées et ayant une forme sensiblement rectangulaire ajourée, ainsi que deux autres paires de pattes 13 s'étendant dans une direction perpendiculaire à la première paire de pattes 12, lesdites pattes 13 s'étendant parallèlement de part et d'autre de la couronne 11. Contrairement aux pattes 12, les pattes 13 comportent en bout une échancrure axialement traversante 13a dont le but sera expliqué plus loin. Les pattes 13 sont également ajourées comme les pattes 12 pour réduire la masse globale de la couronne 11.

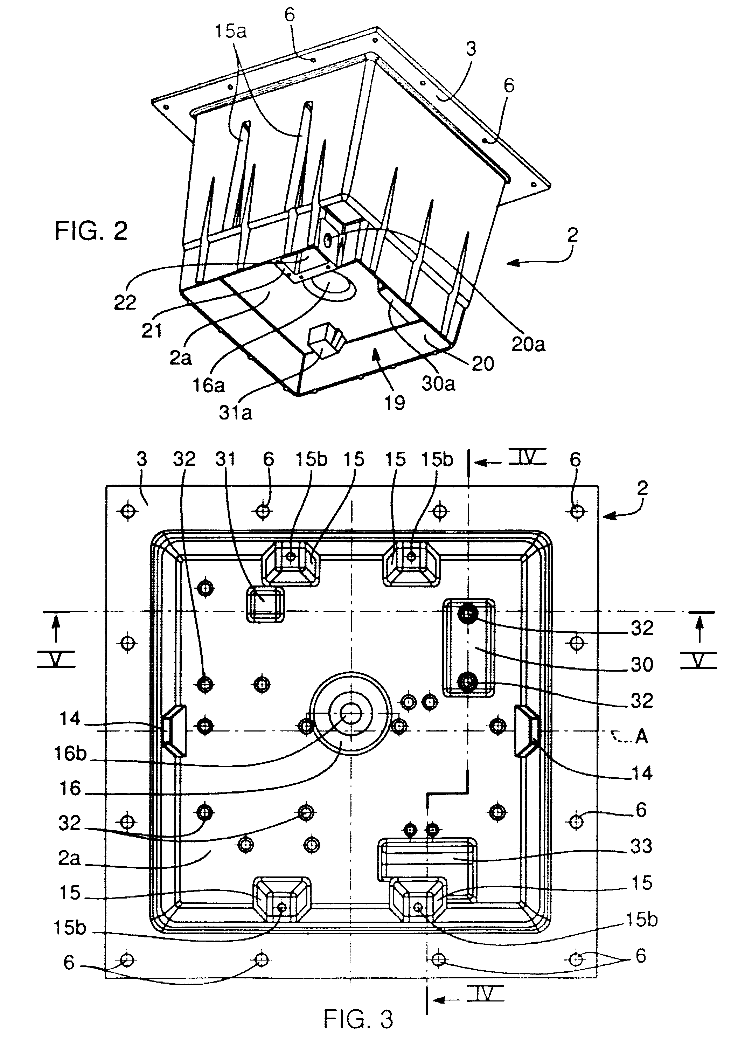

En se référant plus particulièrement à la figure 3, on voit que le récipient 2 comporte une paire de nervures saillantes vers l'intérieur 14 s'étendant sensiblement verticalement le long de deux parois internes opposées du récipient 2, à partir du fond 2a du récipient 2 jusqu'au voisinage de l'ouverture supérieure du récipient. Sur les deux autres parois latérales internes opposées du récipient 2 sont prévues deux autres paires de nervures 15 saillantes vers l'intérieur et s'étendant sensiblement verticalement. Les nervures 15 sont parallèles entre elles et alignées deux à deux dans une direction perpendiculaire à l'axe A passant par la paire de nervures 14. Les nervures 15 sont creuses, comme visible par les renfoncements 15a sur la paroi latérale externe du récipient 2 (voir figures 1 et 2).

Les pattes latérales 12 de la couronne métallique 11 précitée sont destinées à prendre appui sur le sommet des nervures 14, alors que les pattes latérales 13 sont destinées à prendre appui sur le sommet des nervures 15. Le boîtier d'inducteur 8 est fixé au récipient 2, par l'intermédiaire des pattes 13 dont les échancrures terminales 13a sont traversées par une vis (non représentée) qui vient se visser dans des taraudages 15b prévus au sommet des nervures 15.

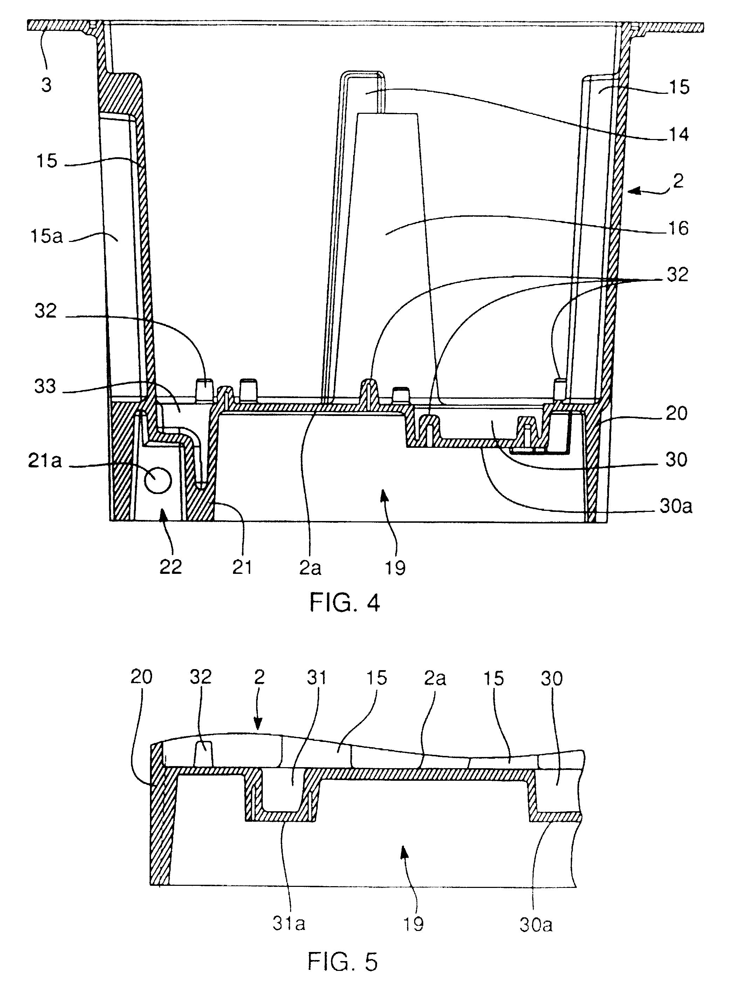

Comme visible sur les figures 3 et 4, les parois latérales internes du récipient 2 sont légèrement évasées vers le haut, ce qui facilite le montage des pattes 12 et 13 à l'intérieur du récipient 2.

Les nervures 14 et 15 s'arrêtent à une distance du bord supérieur du récipient 2 suffisante pour loger complètement la couronne 11 à l'intérieur du récipient 2, la partie du boîtier d'inducteur 8 se trouvant au-dessus de la couronne 11, ainsi que le couvercle 9 étant quant à eux positionnés à l'intérieur du trou 4b de la plaque en fonte 4.

Le fond 2a du récipient 2 comporte, sensiblement en son centre, une cheminée conique 16 s'étendant sensiblement verticalement sur une partie de la hauteur du récipient 2. Cette cheminée 16 est creuse et débouche à sa base 16a à travers le fond 2a du récipient 2 (voir figure 2) et à son sommet par une ouverture 16b concentrique avec le boîtier d'inducteur 8 pour le passage du câble conducteur reliant l'inducteur 8 à un système électronique de puissance (non représenté), un tronçon 17 de ce câble étant représenté sur la figure 1, un presse-étoupe 18 étant emmanché sur le câble 17 pour assurer étanchéité au niveau de l'ouverture 16b de la cheminée 16. Le boîtier d'inducteur 8 comporte à sa base 8b un fond creux en forme de cloche destiné à entourer latéralement le sommet de la cheminée 16.

Comme visible sur la figure 2, la cheminée 16 débouche à sa base 16a dans un compartiment 19 défini immédiatement sous le fond 2a du récipient 2 et délimité latéralement par une jupe périphérique descendante 20 du récipient 2. Dans ce compartiment 19, est logé et retenu le système électronique de puissance qui est constitué d'une ou plusieurs cartes électroniques comportant notamment des transistors de puissance qui dégagent une chaleur importante en fonctionnement.

La jupe latérale périphérique du récipient 2 comporte en outre une cloison interne 21 délimitant un logement 22 dans lequel est placé un bornier de connexion 23 illustré sur la figure 1. Le logement 22 débouche à l'extérieur par un orifice 20a pour permettre le passage d'un câble d'alimentation électrique de haute tension, dont une portion est représentée en 24 sur la figure 1, provenant du réseau général d'alimentation électrique. Ce câble 24 est raccordé à un connecteur 25 pour son branchement à travers l'orifice 20a de la jupe 20 avec le bornier 23. Sur la figure 4, on voit que le logement 22 présente un orifice 2 la à travers la cloison interne 21 pour permettre la connexion électrique entre le bornier 23 et le système électronique de puissance rangé dans le compartiment 19.

Une plaque de fermeture inférieure non représentée est destinée à venir obturer le fond du compartiment 19, avec interposition d'un joint d'étanchéité en élastomère 26 qui présente un profil correspondant à la périphérie du compartiment 19. De manière analogue, une autre petite plaque de fermeture non représentée est destinée à venir obturer le fond du logement 22 avec interposition d'un joint d'étanchéité rectangulaire 27. Le fait de prévoir une plaque de fermeture indépendante pour le logement 22 permet de vérifier le branchement au niveau du bornier de connexion 23, sans avoir à ouvrir le compartiment 19 dans lequel est logé le système électronique de puissance, qui est particulièrement fragile.

Le fond 2a du récipient 2 comporte en outre plusieurs renfoncements 30 et 31 qui font saillie à l'intérieur du compartiment 19, comme visible sur les figures 2, 4 et 5. Ces renfoncements 30 et 31 comportent un fond plat 30a, 31a respectivement, pour permettre d'y plaquer une carte électronique à distance du reste du fond 2a du récipient 2. Plus précisément, les fonds plats 30a et 31a des renfoncements 30,31 sont destinés à permettre la fixation d'un transistor de puissance qui est vissé sur ledit fond plat.

Sur la surface supérieure du fond 2a et du renfoncement rectangulaire 30, sont prévus une pluralité de plots saillants vers le haut 32, qui sont destinés à permettre le vissage de composants électroniques situés dans le compartiment 19 à travers le fond du récipient 2, sans pour autant le traverser.

Le fond 2a du récipient 2 comporte en outre un renfoncement 33 situé à la verticale du logement 22, qui est destiné à faciliter l'évacuation de la chaleur provenant du logement 22.

Le fonctionnement du dispositif de l'invention va maintenant être brièvement décrit en référence aux dessins. Une fois que l'ensemble du dispositif illustré de manière éclatée sur la figure 1 est monté dans la cuve en béton armé 1, l'espace intérieur du récipient 2 est entièrement rempli d'un liquide caloporteur, tel qu'une huile de transformateur ou un mélange d'eau et de liquide antigel, avant de refermer l'ensemble avec la plaque en fonte 4.

En service, c'est-à-dire lorsque le système électronique de puissance a reçu un signal de commande déclenchant son activation pour engendrer le transfert d'énergie par induction électromagnétique entre l'inducteur 8 et un circuit induit porté par exemple par un véhicule automobile stationné au-dessus de la plaque en fonte 4 pour recharger la batterie du véhicule, les composants électroniques de puissance du système s'échauffent par effet Joule. Un tel système utilisant généralement des transistors de puissance, ces derniers dégagent une chaleur très importante, de l'ordre de 200 watts, à l'intérieur du compartiment 19, ce qui pourrait provoquer une panne du système électronique si la température dépassait environ 50-60 ° C. Comme les transistors de puissance sont en contact avec le fond métallique 30a, 31a des renfoncements 30, 31 ménagés dans le fond 2a du récipient 2, la chaleur est transmise par le fond 2a en métal thermiquement conducteur, par exemple en aluminium, au liquide caloporteur contenu dans le récipient, ce qui provoque un brassage de liquide par effet de thermosiphon, le liquide chaud remontant vers le haut du récipient où il se refroidit avant de redescendre vers le fond dans un mouvement de circulation sensiblement en boucle. La présence de la cheminée 16 permet à la chaleur engendrée par les transistors de puissance de remonter le long de la cheminée et donc d'accélérer le mouvement ascendant du liquide chaud vers le haut, ce qui réduit le temps nécessaire à l'échauffement du liquide et favorise ainsi une dissipation plus rapide de la chaleur dans le liquide.

En outre, comme le boîtier d'inducteur 8 comporte un fond creux 8b qui baigne dans la zone supérieure du récipient 2, par exemple dans une zone de l'ordre de 15cm d'eau à partir de la surface supérieure, le liquide chaud qui remonte vers la surface est refroidi plus rapidement par évacuation de la chaleur le long du boîtier d'inducteur 8 vers l'extérieur.

Le dispositif de refroidissement de l'invention permet donc un refroidissement efficace des composants électroniques situés dans le compartiment inférieur du récipient 2, sans utiliser aucun mécanisme d'entraînement supplémentaire consommant de l'énergie comme cela est le cas avec un ventilateur ou une pompe de circulation d'eau froide. Les pannes de système sont ainsi minimisées et son entretien est facilité. Le récipient 2 se comporte en quelque sorte comme un radiateur contenant un liquide qui assure le refroidissement par thermosiphonage.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dispositif de refroidissement pour un système électronique de puissance, ledit système électronique de puissance étant relié, à l'entrée, à un câble d'alimentation en électricité (24), et à sa sortie, à un câble conducteur (17) connecté à un système de transmission de courant (8), l'ensemble du dispositif étant destiné à être enterré dans le sol dans une cuve en béton (1) de façon que le système de transmission de courant soit susceptible de transmettre un courant dans une machine électrique extérieure au dispositif, caractérisé en ce qu'il comporte un récipient métallique étanche (2) en forme de cuvette remplie de liquide caloporteur, un compartiment étanche (19) étant situé sous le fond (2a) de la cuvette, dans lequel est logé le système électronique de puissance dont au moins un composant électronique de puissance est directement fixé sur la face inférieure du fond de la cuvette, en un emplacement déterminé de façon à engendrer dans le récipient (2) un brassage du liquide caloporteur par thermosiphonnage.

2. Dispositif selon la revendication 1, caractérisé en ce que le système de transmission de courant comporte un inducteur connecté au câble conducteur (17) et disposé dans un boîtier (8), le boîtier d'inducteur (8) baignant dans le liquide caloporteur contenu dans le récipient métallique, ledit inducteur étant apte à engendrer un courant induit dans une machine électrique située au-dessus de l'inducteur, par exemple pour la recharge d'une batterie de véhicule automobile.

3. Dispositif selon la revendication 1 ou 2, caractérisé par le fait que le récipient (2) comporte une cheminée (16), de préférence de forme générale tronconique, s'étendant verticalement à partir du fond (2a) du récipient et destinée à être traversée par le câble conducteur (17) qui traverse, de manière étanche, le fond de la cuvette et débouche dans le compartiment étanche (19).

4. Dispositif selon la revendication 3, caractérisé par le fait que la cheminée (16) est sensiblement au centre du récipient (2), et les composants électroniques de puissance sont fixés au fond (2a) du récipient en des emplacements répartis autour de la base de la cheminée.

5. Dispositif selon la revendication 3 ou 4, caractérisé par le fait que le boîtier d'inducteur (8) comporte à sa base (8b) un fond creux en forme de cloche destinée à coiffer latéralement le haut de la cheminée (16), de façon que ladite cloche baigne dans la zone supérieure chaude du liquide.

6. Dispositif selon l'une des revendications de 1 à 5, caractérisé par le fait que le fond (2a) du récipient (2) comporte au moins un renfoncement (30,31) faisant saillie dans le compartiment (19) du système électronique de puissance, le ou les composants électroniques de puissance étant fixés sur la face inférieure (30a,30b) du fond du ou des renfoncements.

7. Dispositif selon l'une des revendications précédentes, caractérisé par le fait que le fond (2a) du récipient (2) comporte des plots (32) en saillie vers l'intérieur du récipient pour permettre d'y enfoncer des moyens de fixation pour les composants électroniques, à partir de la face inférieure du fond du récipient.

8. Dispositif selon l'une des revendications précédentes, caractérisé par le fait que le récipient (2) comporte à sa base une jupe périphérique descendante (20) délimitant avec la face inférieure du fond (2a) du récipient le compartiment précité (19).

9. Dispositif selon la revendication 8, caractérisé par le fait que le fond du compartiment (19) est obturé par une plaque de fermeture, éventuellement avec interposition d'un joint d'étanchéité (26) entre la plaque et le bord inférieur de la jupe (20) du récipient (2).

10. Dispositif selon la revendication 8 ou 9, caractérisé par le fait que la jupe précitée (20) comporte une cloison interne (21) délimitant un logement (22) séparé du compartiment précité (19) pour y loger un bornier (23) entre ledit système électronique de puissance et le câble d'alimentation (24), ledit logement débouchant d'une part, à travers un trou (21a) ménagé dans la cloison interne, dans le compartiment du système électronique de puissance pour la connexion électrique entre ledit système et le bornier, et d'autre part, à travers un trou (20a) ménagé dans la paroi externe de la jupe sur l'extérieur pour le passage du câble d'alimentation.

11. Dispositif selon la revendication 10, caractérisé par le fait que le fond du logement (22) est obturé par une plaque de fermeture indépendante de la plaque de fermeture du compartiment (19), avec interposition éventuelle d'un joint d'étanchéité individuel (27).

12. Dispositif selon la revendication 2 prise seule ou en combinaison avec l'une des revendications 3 à 11, caractérisé par le fait que le récipient (2) comporte sur sa paroi latérale interne des moyens de support (14,15) destinés à coopérer avec des moyens d'appui (12,13) fixés au boîtier d'inducteur (8), pour positionner et supporter le boîtier d'inducteur à l'intérieur du récipient.

13. Dispositif selon la revendication 12, caractérisé par le fait que les moyens de support (14,15) sont formés par des nervures verticales en saillie sur des parois latérales internes du récipient (2) et les moyens d'appui (12,13) par des pattes s'étendant dans un plan perpendiculaire à l'axe vertical du récipient, à partir d'une couronne métallique (11) solidarisée au boîtier d'inducteur (8), lesdites pattes étant destinées à reposer sur le sommet des nervures.

14. Dispositif selon la revendication 13, caractérisé par des moyens de fixation destinés à traverser au moins une patte (13) et la nervure (15) associée, pour immobiliser le boîtier d'inducteur (8) dans le récipient (2).

15. Dispositif selon l'une des revendications précédentes, caractérisé par le fait que le récipient (2) comporte sur son bord supérieur une collerette périphérique (3) s'étendant vers l'extérieur dans un plan perpendiculaire à l'axe du récipient, pour y fixer, avec interposition éventuelle d'un joint d'étanchéité, une plaque de fermeture supérieure (4), de préférence en fonte, destinée à être positionnée au niveau du sol.

16. Dispositif selon la revendication 2 prise seule ou en combinaison avec l'une des revendications 3 à 15, caractérisé par le fait que ladite plaque supérieure (4) comporte un trou central (4b) destiné à recevoir un couvercle plastique (9) qui est fixé au sommet du boîtier (8) de l'inducteur.

17. Dispositif selon la revendication 15 ou 16, caractérisé par le fait que ladite collerette (3) est destinée à reposer sur le bord périphérique supérieur de la cuve (1) qui est réalisée en béton armé pour faciliter le transfert thermique entre la terre environnante et le récipient (2).

18. Dispositif selon l'une des revendications précédentes, caractérisé par le fait que les composants électroniques de puissance du système sont des transistors de puissance.

19. Dispositif selon l'une des revendications précédentes, caractérisé par le fait que le récipient (2) a une forme sensiblement en tronc de pyramide, dont la grande base est ouverte vers le haut.

20. Dispositif selon la revendication 1, caractérisé par le fait que le système de transmission de courant est connecté au câble conducteur (17) qui traverse le récipient (2) sur toute sa hauteur, ledit système de transmission de courant étant extérieur au récipient, de préférence au niveau d'une plaque de fermeture supérieure (4) du récipient.
